# EUROPEAN PATENT SPECIFICATION

(11) **EP 0 734 692 B1**
(45) Date of publication and mention of the grant of the patent: **26.06.2002**
(21) Application number: 96830152.3
(22) Date of filing: 26.03.1996
(51) Int. Cl.: A61C 1/00

(54) **A total hygiene water-pneumatic system applicable on dental apparatus**
Ein total hygienisches wasserpneumatisches System, verwendbar in zahnärztlichen Geräten
Un système d'hygiène aqua-pneumatique complet applicable aux appareils dentaires

(30) Priority: 27.03.1995 IT BO950135
(43) Date of publication of application: 02.10.1996
(73) Proprietor: CASTELLINI S.p.A., I-40013 Castel Maggiore (Bologna) (IT)
(72) Inventor: Castellini, Franco, 40123 Bologna (IT)
(74) Representative: Lanzoni, Luciano

(56) References cited:
- EP-A- 0 042 267
- EP-A- 0 368 818
- DE-U- 8 907 473

## Description

The present invention relates to a total hygiene water - pneumatic system applicable on dental apparatus.

In the sector for the development of dental apparatus, one of the most important elements, if not the very "heart" of the apparatus, is the water - pneumatic system which, as regards the water circuit, supplies the instruments (handpieces and rinsing tumbler with water or physiological solution) and simple units, such as a cuspidor, with rinsing water and, as regards the pneumatic circuit, the activation of instruments (see handpieces with air spray, cooling air and driving air).

Over time and with both increased hygiene requirements and the technical "delicacy" of the instruments on such dental units, solutions were sought to allow not just the safe and lasting operation of such circuits, but also the guarantee of maintaining the system tubes in a highly "aseptic" condition both during and between treatment sessions.

To confirm this, starting with a circuit structure which envisages a first main branch for the supply of water from the mains, and a second main branch for the supply of compressed air from an outside source (compressor), each having a plurality of branches which give onto the said instruments or accessories, various systems have been studied, their concept differentiated even according to their object, inherent in methods and apparatus designed to improve the functionality and disinfection of the circuits, or part of them.

In the case of the water circuit, for example, there are two disinfection philosophies which envisage the physical addition of equipment to the said basic structure of the circuit, one having continuous cycle and the other intermittent: in publications DE - 3.028.550 and DE - 3.611.329 an attempt is made to overcome this problem using apparatus which include a liquid disinfectant container connected to liquid disinfectant dosing means inside the tubes which supply fluid to the instruments on the dental unit, so as to supply the water circuit with disinfected water according to the quantity of water required by the instruments. In contrast, the solutions which envisage the use of intermittent disinfection/sterilisation, as illustrated in publications EP - 111.249 and EP - 317.521 (the latter filed by the Applicant named herein), these solutions envisage the cut-off of the water supply from the mains and, by means of "dedicated" branching with an independent tank, the infeed of sterilising liquid into the water tubes which supply the handpieces; after a given time, set according to the quality of the disinfection/sterilisation required and the specifications of the liquid, the circuit is reopened and emptied of the now polluted sterilising liquid.

A further solution designed to increase the level of hygiene within the water circuit, is described in publication EP - 368.818, in which the instruments supply branch has a continuous water drain which can keep the water in constant movement, avoiding any stagnation within the circuit.

Document DE-U-8907473 shows a sterilization device for dental apparatus, which comprises:
- a water supply line for supplying the instruments of the dental apparatus;
- an air supply line, which is provided with an infeed connected to a compressed air source and an outfeed connected to the dental apparatus;
- a plurality of handpieces connected to the water supply line and to the air supply line; such handpieces are used by the dentist for treating the patients' teeth;
- cut-off means connected to the handpieces for controlling the flow of water and air in said handpieces;
- a tank with a disinfection unit which is provided for disinfecting the water which is supplied to the handpieces; the tank is connected to the water mains by means of a conduit;
- a pump for allowing the flow of water in the water supply line;
- a water heating unit for increasing the water temperature when necessary, placed downstream of the tank with the disinfection unit;
- a control unit connected with the cut-off means, the disinfection unit, the pump and the heating unit for controlling the different elements of the device and allowing / blocking the flow of water and air according to the requirements of the dentist.

All of the afore-mentioned solutions were designed for the water circuit of a dental unit. Systems designed to obtain the same maximum hygiene during treatment sessions and transitory operation are also known for the pneumatic circuit.

One such solution is described in EP - 042.267, where an element for the activation of the spray system on the handpieces is connected to an external control element (e.g.: a foot pedal) with a timer system so that each time the handpiece is picked up from, used and replaced on a tablet, a control valve is automatically opened and a cleaning jet of spray air is blown through the tube in the handpiece.

Another element for the improvement of the constant hygiene of the pneumatic circuit consists of a filter positioned on the said circuit and which retains particles of liquid, that is to say, the condensation which forms in the compressed air from the source.

All of the above-mentioned solutions are designed to obtain maximum hygiene in the said circuits, but are included substantially in a construction context for the existing circuits. Therefore, there are currently no water - pneumatic circuits whose design already includes all of the solutions which, with the passage of time, have been invented in order to obtain both maximum hygiene in the circuits and a real and complete isothermicity and isotonicity of the fluids which they supply to the instruments.

The object of the present invention is, therefore, to create a water - pneumatic circuit, applicable on dental apparatus, which provides maximum hygiene, isothermicity and/or isotonicity of the fluids and which envisages a structure complete with all disinfectant, sterilising and protective equipment for dental surgeon and patient, but at the same time maintains a lasting high level of performance.

The technical features of the present invention, in accordance with the aforesaid objects, are clearly illustrated in the claims herein, and the advantages of the said features are more clearly described in the detailed description below, with reference to the accompanying drawings, which illustrate an embodiment by way of example only, and in which:
- figure 1 is a schematic view of the lines of a water - pneumatic circuit disclosed on dental apparatus;
- figure 2 is a schematic view with some parts cut away to better illustrate others, of a detail of a pair of filter elements which are part of the circuit shown in figure 1.

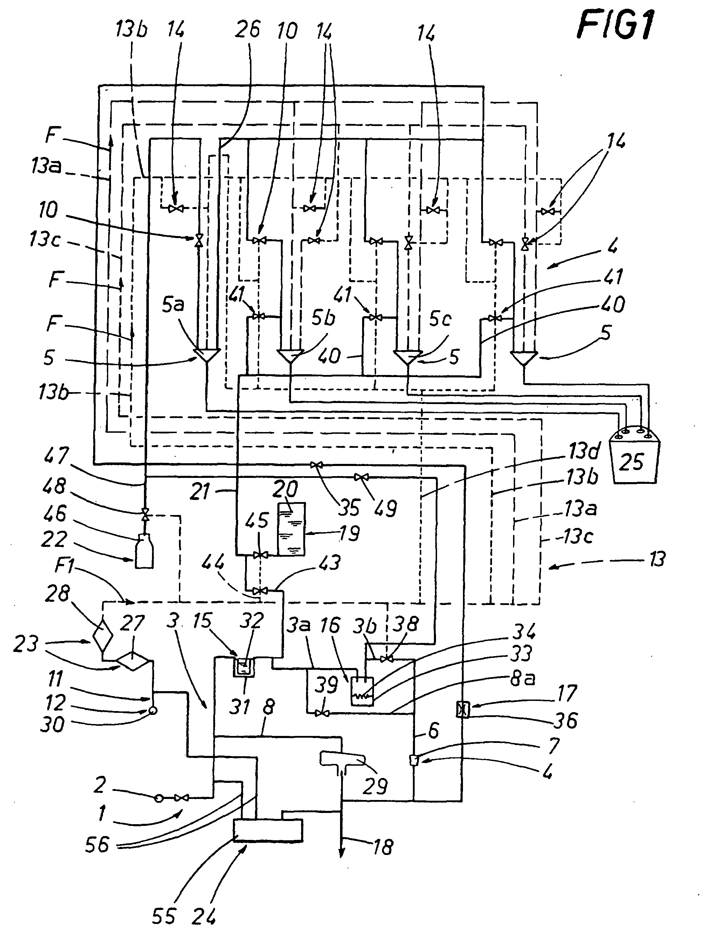

With reference to the accompanying drawings, and especially figure 1, the water - pneumatic circuit disclosed is applied on dental apparatus, such as dental units.

This circuit includes a line 1 for the supply of water and a line 11 for the supply of air: the water supply line 1 is connected at one end to drinking water mains 2 and, at the other end, to the dental unit; here the line "forks" into a first branch 3 which supplies a series of instruments 4 of the dental apparatus, including a plurality of handpieces (shown here schematically, being of the known type, for example, a syringe 5a, a turbine 5b, a micromotor 5c, etc.), and a tube 6 which supplies a rinsing tumbler 7, and a second branch 8 supplying equipment 9, here in particular a cuspidor 29; the infeed of the air supply line 11 is connected to a source 12 of compressed air (a known compressor 30) and the outfeed is connected to the dental unit; in this case, the line 11 separates into a plurality of third branches 13 which distribute the air where required, that is to say, a branch which supplies air as the driving fluid, labelled 13c, one as spray fluid 13a, and one as service fluid 13b; a fourth, independent, branch 13d may be provided, whose function is described later in this text.

The branch 13b which supplies service air is connected to both first water cut-off means 10 on the handpieces 5, so as to obtain the water supply when required, and to second air cut-off means 14, again on the handpieces 5, which allow the air flow, from branches 13a and 13c, when required by the dental surgeon using the handpieces. The first and second means 10 and 14 consist of pneumatic control "ON - OFF" valves, that is to say, valves which keep the circuit to which they are applied open or closed (other valves of this type are illustrated below, being applied over almost the entire circuit).

The line 1 also comprises: a first disinfection and softening unit 15, a second water heating unit 16, a third anti-stagnation unit 17, a fourth intermittent cycle disinfection/sterilising unit 19 and a fifth unit 22 which supplies physiological solution to the handpieces 5.

The air supply line 11 comprises a sixth air filter unit 23, whilst a seventh unit 24 is provided for the control of both lines 1 and 11, the aforementioned units and first and second valve means 10 and 14.

Following the order indicated above, and specifying that the direction of air and water flow is shown by the arrows F and F1, the first disinfection and softening unit 15 is positioned on the first branch 3 which supplies the instruments 4 of the dental apparatus and is upstream of the instruments. This first unit 15 has a continuous action on the instruments 4 by continuously dissolving a solid product according to the requirements of the individual instruments. More specifically, the first unit 15 is provided upstream of a sub-branch 3a and 3b of the first branch, 3a supplying the handpieces 5, and 3b supplying the tube leading to the rinsing tumbler 7; these sub-branches 3a and 3b branch off from the second heating unit 16 before supplying the instruments 4 so that the water passes through them at a controlled temperature, that is to say, a constant temperature suited to the patient's body temperature.

Returning to the first unit 15, it essentially consists of a container 31 for a replaceable cartridge 32 of the solid product (the basic elements being, for example, a calcium and magnesium sequestrant and an active chlorine-based disinfectant), preferably powdered, which is mixed with the water when the latter is required; for disinfection and removal of scale, the product may be dosed in the water according to and in proportion to the water flow required by at least one of the instruments 4 activated: this system is designed to continuously disinfect and to keep disinfected (and free of scale) the first supply branch 3 and the tubes relative to the instrument 4 activated by mixing the sterilising product with the water as it is drawn from the mains 2.

As already indicated, the second water heating unit 16 is positioned downstream of the first unit 15 and supplies the instruments 4 of the dental apparatus with water at an ideal temperature, suited to the patient's body temperature; the second unit 16 includes a disinfected water container 33 with heating means 34 (for example, a heating element) which allows the water temperature to be increased or maintained within the container 33. Obviously, the activation or exclusion of the heating element 34 is controlled by the seventh control unit 24 according to the dental surgeon's requirements.

As visible in figure 1, and as already mentioned, the sub-branches 3a and 3b which supply the handpieces 5 and rinsing tumbler 7 branch off from the first branch 3 at the container 33. Also, a further branch 8a, with relative cut-off valve 39 for the selection of cold water for the rinsing tumbler 7 starts upstream of the container 33. The selection of cold or heated water (valves 38 of branch 3b and 39 of branch 8a) is controlled by the said seventh unit 24 which maintains the last setting made by the dental surgeon.

The third anti-stagnation unit 17 is also on the first branch 3, but is downstream of the instruments 4 of the dental apparatus; this third unit 17 is connected to a main drain, labelled 18 in figure 1, on the apparatus so as to allow the outflow of a small amount of water to the main drain 18. This outflow of water occurs when the dental unit is switched on, to avoid water remaining in the water supply branch 3.

The third unit 17 substantially includes a water cut-off means 35 located along the first branch 3 (downstream of the handpieces 5) which can be activated using the seventh unit 24 and a constriction 36 (maintained in the open configuration) in the portion of tube which gives onto the main drain 18 to allow a controlled, adjustable outflow of water.

The continuous passage of water at a controlled temperature can also be used to keep the syringe 5a at a temperature as close as possible to that of the water supplied to the patient: to do this (and so eliminate temperature changes) a by-pass diverting the first branch 3a within the syringe body was created, then returned to normal by a drainage tube 26 again giving onto the first branch 3. This structure of the syringe 5a makes it an integral part of the first branch 3, thanks to the connection of the drainage tube 26 to the first branch 3a which extends to the other handpieces and, above all, to the main drain 18: in this way, when the dental unit is switched on, in the third anti-stagnation unit 17 along the first branch 3 there is a continuous flow of water at a constant temperature within the syringe 5a.

The fourth unit 19 for the intermittent cycle disinfection/sterilisation of the handpieces 5 is positioned on the first water supply branch 3, downstream of the first unit 15. This fourth unit essentially includes a tank 20 containing a sterilising liquid which can be supplied from outside the dental unit, a supply circuit 21 independent or partially independent of the first 3, branching off from the tank 20 and leading to each of the handpieces 5, then joining up with the first branch 3, by means of the said first cut-off means 10. In the solution illustrated in figure 1, the circuit has as many sub-branches 40 as there are handpieces present to be sterilised; each sub-branch 40 has its own cut-off valve 41 downstream of those labelled 10 which are ordinary valves for cutting off the fluid from the first branch 3. The fourth disinfection/sterilising unit 19 is activated when the dental unit pauses and disinfects or sterilises only those zones of the first branch 3 downstream of the said first cut-off valves 10. During the sterilising cycle phase, the handpieces 5 are placed inside a tank 25 (shown to the right of the handpieces in figure 1) which both supports the handpieces and contains the now polluted sterilising liquid, and rinsing liquid during the last phase of the sterilising cycle.

Obviously, the fourth unit 19 has a relative cut-off valve 45 opened only when required by the system, so as not to interfer with the flow of water from the first branch 3 (again, all controlled by the seventh unit 24).

The phase at the end of the sterilising cycle comprises rinsing of the independent supply circuit 21 and the sub-branches 40, as well as those parts of the handpieces 5 sterilised; this phase is implemented by means of a sub-branch 43 for the supply of disinfected water which substantially branches off from the first unit 15 until it reaches the circuit 21 from where, by the activation of a valve 44, the disinfected water flows in (in turn closing the circuit 21 upstream with valve 45). Alternatively, the afore-mentioned independent air branch 13d can be used to remove the polluted liquid; this branch 13d extends inside the syringe 5a (to which it supplies air), and also branches onto all of the other handpieces 5 at the said valves 41 for cutting off the disinfectant - sterilising liquid: the tubes in the handpieces 5 may, therefore, be cleaned using disinfected water or air.

The fifth unit 22 is designed to supply the first branch 3 with a physiological solution for the handpieces 5, and where the liquid in question is an isotonic solution (i.e.: having equal "osmotic" pressure) relative to the patient's blood. The fifth unit 22 supplies the handpieces through its outfeed at the first branch 3 upstream of the handpieces 5; to supply the physiological solution, the fifth unit 22 consists of a container 46 for the said liquid connected to a second independent circuit 47 which gives directly onto the first water supply branch 3 and whose opening and closure is controlled by a corresponding first cut-off valve 48 in the second circuit 47, and a second cut-off valve 49 in the first branch 3 which allows the water flow from the first unit 15 to be blocked, so as to avoid interference with the flow of the physiological solution.

If the physiological solution is used in the first branch 3, the third anti-stagnation unit 17 is closed by the activation of a closing configuration for the cut-off valve 35: when the dental surgeon selects the physiological solution supply function, the first valve 48 is opened and the second valve 49 is closed on the first branch 3, so that the physiological solution flows through the first branch 3. The water still present in the first branch 3 flows towards the main drain 18, since the cut-off valve 35 is still open and, after a given time (which may vary between approximately 5 and 15 seconds), the said valve 35 is closed. This avoids a water - physiological solution changeover interval in the handpieces 5, that is to say, the handpieces 5 are supplied with physiological solution within a very short period of time.

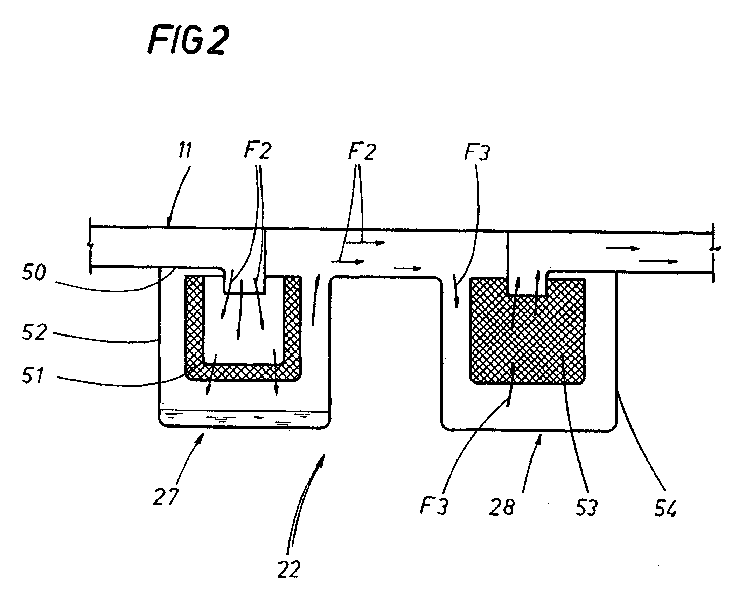

As regards the air supply line 11, the said sixth air filter unit 23 is positioned on the line 11 upstream of the third branches 13a, 13b and 13c which distribute the air. This sixth unit 23 consists (see also figure 2) of two filter elements 27 and 28 which can be removed from the line and are positioned one after the other on the same supply line 11: the first, labelled 27, is of the so-called "coalescent" type, that is to say, it retains any liquids suspended in the air which passes through it (for example, condensate or traces of oil from the compressor, etc.), whilst the second, labelled 28, filters out the bacterial impurities present in the air which flows through it.

More precisely, the first filter element 27 consists of an internal tube 50 which forces the air flow (see arrows F2) through a first filter 51, housed in a special body 52, and to exit the filter in a "drier" state, returning to the supply line 11. Thus, the first filter 51 absorbs the liquids suspended in the air flow, which then collect at the bottom of the body 52.

The second filter element 28 also consists of a second filter 53, housed in a second body 54; in this case, the air entering (see arrow F3) from the supply line 11 flows over the exterior of the second filter 53, the bacteria-free air then exiting the filter directly into the supply line 11 and going on to the various third branches 13a, 13b, 13c and 13d. The latter filter 53 can be removed and sterilised in an autoclave so that it can be reused with maximum hygiene.

The seventh unit 24, which in the latest dental units consists substantially of a microprocessor 55 with a plurality of sensors 56 (here shown schematically only, with the lines connecting them to the supply lines 1 and 11), which control both the afore-mentioned first and second cut-off valves 10 and 14, and all of the afore-mentioned units and is positioned on the dental unit so that the dental surgeon can activate it using selection systems which are not illustrated. The microprocessor 55 is also connected to the water and air supply lines 1 and 11 and their relative branches 3, 8 and 13: in this way, the microprocessor 55 can select and activate one or more of the said units 15, 16, 17, 19 and 22, depending on requirements.

A circuit with this structure, therefore, allows the supply of fluids in a dental unit particularly suited to the object for which the said dental unit was designed.

The particular and complete equipment of the water circuit means that the dental surgeon can always supply continuously disinfected water (thanks to the first disinfection unit) which has a constant temperature, suited to the object (thanks to the second unit). Moreover, depending on the situation, it is always possible to select a physiological solution, so that the fluid to be supplied is isotonic in particular pathological situations and during treatment sessions (thanks to the fifth unit).

In addition to the above, the water supply line, the relative branches and handpieces are constantly kept extremely hygienic thanks to the fourth unit which allows a "strong" disinfection/sterilisation, and to the possibility of maintaining a constant flow of water within the tubes, thus avoiding any stagnation, that is to say, the creation of zones with the risk of the formation of bacteria.

To complete the picture of such circuits, the double filter barrier should be mentioned, which allows the pneumatic line to be supplied with an air flow (both operating and service) which is perfectly "controlled" both from the point of view of undesired solids and the point of view of hygiene.

In other words, this is a water - pneumatic circuit all parts of which are expressly designed to guarantee a high level of safety, hygiene for the patient and dental surgeon, and operating flexibility which allows the supply of the fluid suited to the object, aseptic and isotonic, and having the ideal constant temperature for medical requirements, allowing optimum results.

## Claims

1. A total hygiene water - pneumatic system, in particular applicable on dental apparatus, comprising:
- a water supply line (1), one end being connectable to water mains (2), and the other to the said apparatus by means of a first branch (3) adapted for supplying a series of instruments (4) for the dental apparatus including a plurality of handpieces (5) and a tube (6) adapted for supplying a rinsing tumbler (7), and a second branch (8) supplying equipment (9); there being first cut-off means (10) for the said water at least on the said handpieces (5) so as to allow the supply of water when required;
- an air supply line (11), the infeed being connected to a compressed air source (12) and the outfeed to the said apparatus, that is to say, a plurality of third branches (13) for the distribution of the air at least as driving fluid (13c), spray fluid (13a) and service fluid (13b); second cut-off means (14) for the air being provided at least on the said handpieces (5) so as to allow the supply of air when required,
- a first disinfection and softening unit (15) for the said water, positioned on the first branch (3) adapted for supplying the instruments (4) of the dental apparatus, upstream of the instruments, and having a continuous action on the said instruments (4) by continuously dissolving a solid product, depending on the individual requirements of the instruments;
- a second water heating unit (16) positioned downstream of the first unit (15), that is to say, on the first branch (3), and adapted for supplying the instruments (4) of the dental apparatus with water at a constant temperature suited to the patient's body temperature;
- a third anti-stagnation unit (17) for the water, positioned on the first branch (3), downstream of the instruments (4) of the dental apparatus, and being connected to a main drain (18) on the said apparatus so that, at least when the apparatus is switched on, there is a controlled flow of the said water to the main drain (18);
- a fourth intermittent cycle disinfection / sterilisation unit (19) for the handpieces (5) including a tank (20) containing a disinfectant /sterilising liquid, an independent supply circuit (21) branching off from the said tank (20) and giving onto each of the handpieces (5) through the said first cut-off means (10) ;
- a fifth unit (22) adapted for supplying a physiological solution isotonic with the patient's blood circulation to the handpieces (5), supplying said handpieces through its outfeed at the first branch (3) upstream of the handpieces (5);
- a sixth filter unit (23), positioned on the air supply line (11), upstream of the third supply branches (13);
- a seventh unit (24) for the control of the first (10) and second (14) cut-off means and the afore-mentioned units (15, 17, 19, 22), positioned on the apparatus, and being connected to the water and air supply lines (1, 11) and relative branches (3, 8, 13) so as to allow the selection and relative activation of one or more of the units (15, 17, 19, 22).

2. The system according to claim 1, **characterised in that** the first disinfection and softening unit (15) for the water is provided upstream of two branches (3a, 3b) of the first branch (3), respectively supplying the handpieces (5) and the tube (6) which in turn supplies the rinsing tumbler (7).

3. The system according to claim 1, **characterised in that** the fourth intermittent cycle disinfection / sterilisation unit (19) comprises a tank (25) containing the sterilising liquid as well as a rinsing liquid which flushes through the handpieces (5) at the end of the disinfection / sterilisation cycle; the tank (25) also supporting the handpieces (5) during execution of the sterilisation cycle.

4. The system according to claim 1, in which the handpieces (5) are a dental syringe (5a) with first water cut-off means (10) and a drainage tube (26) relative to the water supply line (1), that is to say, positioned in the first branch (3), **characterised in that** the third anti-stagnation unit (17) for the water is positioned on the first branch (3) downstream of the syringe (5a), that is to say, in contact with the drain (18), so that the first water supply branch (3) is connected with the main drain (18) and so that the water flows constantly through the syringe (5a).

5. The system according to claim 1, **characterised in that** the sixth filter unit (23) consists of two removable filter elements (27, 28), positioned one after the other on the supply line (11), the first (27) filtering out particles of liquids suspended in the air which flows through it, and the second (28) filtering out bacterial impurities present in the air flowing through it.

6. The system according to claim 5, **characterised in that** the second filter elements (28) can be sterilised in an autoclave.

7. System according to claim 1 **characterised in that** the feeding unit (22) comprises:
a container (46) for the physiological solution;
a second circuit (47) for connecting the container (46) to the first water supply branch (3);
a first cut-off valve (48) placed in said second circuit (47) for controlling opening and closure of the second circuit (47);
a second cut-off valve (49) placed in the first branch (3) downstream of the disinfection and softening unit (15) for allowing the water flow from said disinfection and softening unit (15) to be blocked.

8. System according to claim 7 **characterized in that** it also comprises a water cut-off means (35) placed upstream of the anti-stagnation unit (17) at least for blocking the physiological liquid flow to the anti-stagnation unit (17).

9. System according to claim 8 **characterized in that** said control unit (24) comprises a microcomputer (55) adapted for controlling the first cut-off valve (48), the second cut-off valve (49) and the third cut-off valve (35), said microcomputer (55) closing said second cut-off valve (49) and, after a predefined time, said third cut-off valve (35) upon the opening of said first cut-off valve (48).

## Patentansprüche

1. Ein total hygienisches wasserpneumatisches System, verwendbar insbesondere in zahnärztlichen Geräten, enthaltend:
- eine Zuführleitung (1) für Wasser, von welcher ein Ende an das Wassernetz (2) anschliessbar ist und das andere an die genannten Geräte mit Hilfe einer ersten Zweigleitung (3), geeignet zum Speisen einer Reihe von Instrumenten (4) der zahnärztlichen Geräte, einschliesslich einer Anzahl von Handstücken (5) und einer Leitung (6), die zum Speisen eines Spülbechers (7) vorgesehen ist, und einer zweiten, die Vorrichtung (9) speisenden Leitung (8); wobei erste Absperrmittel (10) für das genannte Wasser wenigstens an den genannten Handstücken (5) vorhanden sind, um die Wasserzufuhr zu erlauben, wenn sie erforderlich ist;
- eine Zuführleitung (11) für Luft, deren Eingang an eine Druckluftquelle (12) angeschlossen ist und deren Ausgang an die genannten Geräte, das heisst durch eine Anzahl von dritten Abzweigungen (13) zum Verteilen der Luft wenigstens als Antriebsluft (13c), als Sprühluft (13a) und als Betriebsluft (13b); wobei zweite Absperrmittel (14) für die Luft wenigstens an den genannten Handstücken (5) vorgesehen sind, um die Luftzufuhr zu erlauben, wenn sie erforderlich ist;
- eine erste Desinfektions- und Enthärtungseinheit (15) für das genannte Wasser, angeordnet an der zum Speisen der Instrumente (4) der zahnärztlichen Geräte bestimmten ersten Zweigleitung (3), und zwar stromaufwärts der Instrumente, welche eine kontinuierliche Wirkung auf die genannten Instrumente (4) ausübt, und zwar durch ein ständiges Lösen eines festen Produktes, das von den individuellen Anforderungen durch die Instrumente abhängt;
- eine zweite Wasserheizeinheit (16), positioniert stromabwärts der ersten Einheit (15), das heisst an der ersten Zweigleitung (3) und dazu bestimmt, die Instrumente (4) der zahnärztlichen Geräte mit Wasser von einer konstanten Temperatur zu versorgen, die der Körpertemperatur des Patienten angepasst ist;
- eine dritte Antistaueinheit (17) für das Wasser, angeordnet an der ersten Zweigleitung (3) stromabwärts der Instrumente (4) der zahnärztlichen Geräte und angeschlossen an einen Hauptablass (18) an dem genannten Gerät, so dass wenigstens dann, wenn das Gerät eingeschaltet ist, ein kontrolliertes Abfliessen des genannten Wassers zu dem Hauptablass (18) hin erfolgt;
- eine vierte Desinfektions- und Sterilisationseinheit (19) mit intermittierendem Zyklus für die Handstücke (5), enthaltend einen Behälter (20) mit einer Desinfektions- und Sterilisierflüssigkeit, sowie einen unabhängigen Speisekreis (21), der sich von dem genannten Behälter (20) aus erstreckt und über die genannten ersten Absperrmittel (10) zu jedem der Handstücke (5) führt;
- eine fünfte Einheit (22), bestimmt zum Zuführen einer mit dem Blutkreislauf des Patienten isotonischen physiologischen Lösung an die Handstücke (5), wobei die genannten Handstücke durch den Ausgang an der ersten Zweigleitung (3) stromaufwärts der Handstücke (5) gespeist werden;
- eine sechste Filtereinheit (23), angeordnet an der Zuführleitung (11) für die Luft stromaufwärts der dritten Abzweigungen (13);
- eine siebente Einheit (24) zum Steuern der ersten (10) und zweiten (14) Absperrmittel und der vorgenannten Einheiten (15, 17, 19, 22), positioniert an dem Gerät und angeschlossen an die Zuführleitungen (1, 11) für Wasser und Luft und die entsprechenden Zweigleitungen (3, 8, 13), so dass die Wahl und die jeweilige Aktivierung von einer oder mehreren Einheiten (15, 17, 19, 22) erlaubt ist.

2. System nach Patentanspruch 1, **dadurch gekennzeichnet, dass** die erste Desinfektions- und Enthärtungseinheit (15) für das Wasser stromaufwärts der beiden Abzweigungen (3a, 3b) der ersten Zweigleitung (3) vorgesehen ist, welche jeweils die Handstücke (5) und die Leitung (6) speisen, die wiederum Wasser an den Spülbecher (7) führt.

3. System nach Patentanspruch 1, **dadurch gekennzeichnet, dass** die vierte Desinfektions- und Sterilisiereinheit (19) mit intermittierendem Zyklus einen Behälter (25) enthält, welcher die Sterilisierflüssigkeit beinhaltet wie auch eine Spülflüssigkeit, welche am Ende des Desinfektions- und Sterilisierzyklus durch die Handstücke (5) fliesst; wobei der Behälter (25) während des Ablaufs des Sterilisierzyklus ebenfalls die Handstücke (5) trägt.

4. System nach Patentanspruch 1, bei welchem die Handstücke (5) aus einer Dentalspritze (5a) mit einem ersten Absperrmittel (10) bestehen sowie aus einer die Zuführleitung (1) für Wasser betreffenden Ablassleitung (26), das heisst positioniert in der ersten Zweigleitung (3), **dadurch gekennzeichnet, dass** die dritte Antistaueinheit (17) für das Wasser an der ersten Zweigleitung (3) stromabwärts der Spritze (5a) angeordnet ist, das heisst im Kontakt mit dem Ablass (18), so dass die erste Zweigleitung (3) mit dem Hauptablass (18) verbunden ist und somit das Wasser ständig durch die Spritze (5a) fliessen kann.

5. System nach Patentanspruch 1, **dadurch gekennzeichnet, dass** die sechste Filtereinheit (23) aus zwei entfernbaren Filterelementen (27, 28) besteht, angeordnet eine hinter der anderen entlang der Zuführleitung (11), wobei das erste (27) die Flüssigkeitspartikel herausfiltert, die in der durch dieses strömende Luft schweben, und das zweite (28) die in der durch dieses strömende Luft vorhandenen bakteriellen Unreinheiten herausfiltert.

6. System nach Patentanspruch 5, **dadurch gekennzeichnet, dass** die genannten zweiten Filterelemente (28) in einer Autoklave sterilisiert werden können.

7. System nach Patentanspruch 1, **dadurch gekennzeichnet, dass** die Zuführeinheit (22) wie folgt enthält:
- einen Behälter (46) für die physiologische Lösung;
- einen zweiten Kreis (47) zum Verbinden des Behälters (46) mit der ersten Zweigleitung (3);
- ein erstes Absperrventil (48), angeordnet in dem genannten zweiten Kreis (47), zum Steuern des Öffnens und des Schliessens des zweiten Kreises (47);
- ein zweites Absperrventil (49), angeordnet an der ersten Zweigleitung (3) stromabwärts der Desinfektions- und Enthärtungseinheit (15), um zu ermöglichen, dass das von der genannten Desinfektions- und Enthärtungseinheit (15) kommende Wasser abgesperrt werden kann.

8. System nach Patentanspruch 7, **dadurch gekennzeichnet, dass** es ebenfalls Absperrmittel (35) für Wasser enthält, die stromaufwärts der Antistaueinheit (17) angeordnet sind und wenigstens zum Absperren der zu der Antistaueinheit (17) fliessenden physiologischen Flüssigkeit dienen.

9. System nach Patentanspruch 8, **dadurch gekennzeichnet, dass** die genannte Steuereinheit (24) einen Mikroprozessor (55) enthält, der zum Steuern des ersten Absperrventils (48), des zweiten Absperrventils (49) und des dritten Absperrventils (35) dient, wobei der genannte Mikroprozessor (55) das genannte zweite Absperrventil (49) schliesst und dann nach einer bestimmten Zeitspanne das genannte dritte Absperrventil (35), um danach das Öffnen des genannten ersten Absperrventils (48) vorzunehmen.

## Revendications

1. Un système d'hygiène aqua-pneumatique complet, pouvant être appliqué en particulier sur des appareils dentaires, comprenant :
- une ligne (1) d'alimentation en eau, dont une extrémité peut être reliée à un réseau d'eau (2) et l'autre extrémité à l'appareil dentaire en question par l'intermédiaire d'une première ramification (3) destinée à alimenter une série d'instruments (4) de ce même appareil dentaire comprenant plusieurs pièces à main (5) ainsi qu'un conduit (6) destiné à alimenter à son tour un gobelet de rinçage (7), et d'une deuxième ramification (8) alimentant un équipement (9) ; des premiers moyens (10) de coupure de ladite eau étant prévus au moins sur lesdites pièces à main (5) de manière à permettre l'alimentation en eau quand celle-ci est nécessaire ;
- une ligne (11) d'alimentation en air, dont l'orifice d'entrée est relié à une source d'air comprimé (12) et l'orifice de sortie à l'appareil dentaire en question, c'est-à-dire, une série de troisièmes ramifications (13) destinées à distribuer l'air au moins comme fluide moteur (13c), fluide spray (13a) et fluide de service (13b) ; des deuxièmes moyens (14) de coupure de l'air étant prévus au moins sur lesdites pièces à main (5) de manière à permettre l'alimentation en air quand celle-ci est nécessaire ;
- un premier groupe (15) de désinfection et d'adoucissement de l'eau, placé sur la première ramification (3) destinée à alimenter les instruments (4) de l'appareil dentaire, en amont des instruments, et ayant une action continue sur lesdits instruments (4) en dissolvant en continu un produit solide selon les besoins de chacun des instruments ;
- un deuxième groupe (16) de chauffage de l'eau, placé en aval du premier groupe (15), c'est-à-dire sur la première ramification (3), et destiné à alimenter en eau les instruments (4) de l'appareil dentaire à une température constante adaptée à la température corporelle du patient ;
- un troisième groupe (17) d'anti-stagnation de l'eau, placé sur la première ramification (3), en aval des instruments (4) de l'appareil dentaire, et relié à une vidange principale (18) sur ledit appareil de manière à ce qu'il y ait un flux contrôlé de ladite eau vers la vidange principale, au moins quand l'appareil est activé ;
- un quatrième groupe (19) de désinfection/stérilisation à cycle intermittent des pièces à main (5), comprenant un réservoir (20) contenant un liquide de désinfection/stérilisation, un circuit d'alimentation (21) indépendant bifurquant à partir de ce même réservoir (20) et débouchant dans chacune des pièces à main (5) à travers lesdits premiers moyens (10) de coupure ;
- un cinquième groupe (22) destiné à alimenter aux pièces à main (5) une solution physiologique isotonique par rapport au flux sanguin du patient, alimentant ces mêmes pièces à main à travers son orifice de sortie au niveau de la première ramification (3) en amont des pièces à main (5) ;
- un sixième groupe (23) de filtration, placé sur la ligne (11) d'alimentation en air, en amont des troisièmes ramifications d'alimentation (13) ;
- un septième groupe (24) de contrôle des premiers (10) et des deuxièmes (14) moyens de coupure ainsi que des groupes susmentionnés (15, 17, 19, 22), placé sur l'appareil et relié aux lignes d'alimentation en eau et en air (1, 11) et aux ramifications (3, 8, 13) correspondantes, de manière à permettre la sélection et l'activation correspondante d'un ou de plusieurs des groupes (15, 17, 19, 22).

2. Le système selon la revendication 1, **caractérisé en ce que** ledit premier groupe (15) de désinfection et d'adoucissement de l'eau est prévu en amont de deux ramifications (3a, 3b) de la première ramification (3) qui alimentent, respectivement, les pièces à main (5) et le conduit (6), lequel alimente à son tour le gobelet de rinçage (7).

3. Le système selon la revendication 1, **caractérisé en ce que** ledit quatrième groupe (19) de désinfection/stérilisation à cycle intermittent comprend un réservoir (25) contenant le liquide de stérilisation ainsi qu'un liquide de rinçage qui circule dans les pièces à main (5) à la fin du cycle de désinfection/stérilisation ; le réservoir (25) supportant aussi les pièces à main (5) durant l'exécution du cycle de stérilisation.

4. Le système selon la revendication 1, dans lequel les pièces à main (5) sont une seringue dentaire (5a) pourvue de premiers moyens (10) de coupure de l'eau et d'un conduit de vidange (26) relatif à la ligne (1) d'alimentation en eau, c'est-à-dire dans la première ramification (3), **caractérisé en ce que** ledit troisième groupe (17) d'anti-stagnation de l'eau est placé sur la première ramification (3) en aval de la seringue (5a), c'est-à-dire en communication avec ladite vidange (18), de sorte que la première ramification (3) d'alimentation en eau est reliée avec la vidange principale (18) et de sorte que l'eau circule en permanence à travers la seringue (5a).

5. Le système selon la revendication 1, **caractérisé en ce que** ledit sixième groupe (23) de filtration consiste en deux éléments filtrants (27, 28) amovibles, placés l'un à la suite de l'autre sur la ligne d'alimentation (11), le premier (27) filtrant les éventuelles particules de liquides en suspension dans l'air qui le traverse, et le deuxième (28) filtrant les impuretés bactériennes présentes dans l'air qui le traverse.

6. Le système selon la revendication 5, **caractérisé en ce que** ledit deuxième élément filtrant (28) peut être stérilisé en autoclave.

7. Le système selon la revendication 1, **caractérisé en ce que** ledit cinquième groupe (22) d'alimentation comprend : un récipient (46) destiné à contenir la solution physiologique ; un deuxième circuit (47) destiné à relier ledit récipient (46) à la première ramification (3) d'alimentation en eau ; une première vanne d'arrêt (48) placée dans ledit deuxième circuit (47) et destinée à commander l'ouverture et la fermeture de ce même deuxième circuit (47) ; une deuxième vanne d'arrêt (49) placée dans la première ramification (3) en aval du groupe (15) de désinfection et d'adoucissement pour pouvoir bloquer le flux d'eau qui arrive de ce même groupe (15) de désinfection et d'adoucissement.

8. Le système selon la revendication 7, **caractérisé en ce qu'**il comprend également des moyens (35) de coupure de l'eau, placés en amont du groupe (17) d'anti-stagnation et destinés au moins à bloquer le flux de liquide physiologique vers ce même groupe (17) d'anti-stagnation.

9. Le système selon la revendication 8, **caractérisé en ce que** ledit septième groupe (24) de contrôle comprend un micro-ordinateur (55) destiné à contrôler la première vanne d'arrêt (48), la deuxième vanne d'arrêt (49) et la troisième vanne d'arrêt (35), ledit micro-ordinateur (55) activant la fermeture de ladite deuxième vanne d'arrêt (49) et, après un temps prédéfini, de ladite troisième vanne d'arrêt (35) au moment de l'ouverture de ladite première vanne d'arrêt (48).
